# EUROPÄISCHE PATENTSCHRIFT

(11) **EP 1 350 137 B1**
(45) Veröffentlichungstag und Bekanntmachung des Hinweises auf die Patenterteilung: **06.10.2010**
(21) Anmeldenummer: 02700197.3
(22) Anmeldetag: 08.01.2002
(51) Int. Cl.: G02F 1/133, G02F 1/1343, G11B 7/135

(54) **OPTISCHES KOMPENSATIONSELEMENT**
OPTICAL COMPENSATION ELEMENT
ELEMENT DE COMPENSATION OPTIQUE

(30) Priorität: 12.01.2001 DE 10101500; 29.03.2001 DE 10115702
(43) Veröffentlichungstag der Anmeldung: 08.10.2003
(73) Patentinhaber: Thomson Licensing, 92130 Issy-les-Moulineaux (FR)
(72) Erfinder: HAIN, Mathias, 64291 Darmstadt (DE); SOMALINGAM, Somakanthan, 64283 Darmstadt (DE); TSCHUDI, Theo, 64293 Darmstadt (DE)
(74) Vertreter: Thies, Stephan
(86) Internationale Anmeldenummer: PCT/EP2002/000099
(87) Internationale Veröffentlichungsnummer: WO 2002/056099

(56) Entgegenhaltungen:
- EP-A- 0 258 996
- EP-A- 1 011 009
- WO-A-01/48748
- US-A- 5 572 344
- STALLINGA S ET AL: "Liquid crystal aberration compensation devices" OPTICAL STORAGE AND OPTICAL INFORMATION PROCESSING, TAIPEI, TAIWAN, 26-27 JULY 2000, Bd. 4081, Seiten 50-59, XP008003654 Proceedings of the SPIE - The International Society for Optical Engineering, 2000, SPIE-Int. Soc. Opt. Eng, USA ISSN: 0277-786X
- PATENT ABSTRACTS OF JAPAN vol. 1998, no. 13, 30. November 1998 (1998-11-30) -& JP 10 221703 A (CITIZEN WATCH CO LTD), 21. August 1998 (1998-08-21) in der Anmeldung erwähnt

## Beschreibung

Die vorliegende Erfindung betrifft ein optisches Kompensationselement zur Wellenfrontbeeinflussung gemäß dem Oberbegriff des Anspruchs 1.

Ein derartiges Kompensationselement ist aus der EP 0258996 A2 bekannt.

Eine Aufgabe der Erfindung ist es, ein demgegenüber verbessertes Kompensationselement vorzuschlagen. Erfindungsgemäß sind dazu die im kennzeichnenden Teil des Anspruchs 1 angegebenen Merkmale vorgesehen.

Jede der Hauptelektroden ist an genau einer Stelle mit einer Querelektrode verbunden. Dies hat den Vorteil, daß bis zu 50% der Kontaktelektroden eingespart werden können. Es ist dabei nicht erforderlich, die elektrische Spannung auf beiden Seiten der Hauptelektroden genau aufeinander anzupassen. Es ergibt sich eine größere Designfreiheit, da lediglich auf einer Seite der Hauptelektroden ein Anschluß vorzusehen ist. Weiterhin ist die Anzahl von erforderlichen Ansteuerelektroden verringert.

Bestehen Querelektrode und Ansteuerelektrode aus dem gleichen Material, wobei der Querschnitt der Querelektrode geringer ist als derjenige der Hauptelektrode, so hat dies den Vorteil eines großen Spannungsabfalls entlang der Querelektrode, wodurch auf kurzer Strecke eine große Potentialänderung erzielbar der Hauptelektrode ein geringer Spannungsabfall auftritt, wodurch schnellere Potentialänderungen erzielbar sind und ein möglichst gleichmäßiges Potential über die gesamte Hauptelektrode erreicht wird, auch bei Verwendung geringerer Widerstände.

Vorteilhafterweise sind die Hauptelektroden im wesentlichen rotationssymmetrisch angeordnet und weisen für konstanten Radius eine konstante Spannung gleichen Vorzeichens auf. Dies hat den Vorteil, daß bei vielen Schaltmaterialien, beispielsweise ferroelektrischen Flüssigkristallen, ein gleiches Schaltverhalten über den einem bestimmten Radius entsprechender Ring auftritt, also eine gleiche optische Änderung. Bei einem Nematen als Schaltmaterial kann auch unterschiedliches Vorzeichen der angelegten Spannungen vorgesehen sein, da dies auf den zu erzielenden optischen Effekt bei diesen Materialien keinen Einfluß hat. Jedoch bei anderen Schaltmaterialien würde bei unterschiedlichem Vorzeichen eine unterschiedliche Reaktion auftreten. Je nach gewünschtem Phasenkorrekturprofil sind auch andere als rotationssymmetrische Geometrien vorteilhaft anwendbar.

Erfindungsgemäß ist vorgesehen, daß die Hauptelektroden die Form nahezu geschlossener Ringe mit unterschiedlichen Radien aufweisen und an ihren der Öffnung des Rings gegenüberliegenden Seiten mit der Querelektrode verbunden sind. Dies hat den Vorteil, daß ein möglichst großer Bereich der zur Verfügung stehenden Fläche mit der gewünschten Hauptelektrodenform bedeckt ist und lediglich ein kleiner Teil der Fläche für die Querelektrode, also zur Potentialzuführung, gebraucht wird, wenn die Querelektrode durch die Öffnung der jeweiligen Ringe geführt ist. Vorteilhafterweise ist eine Kreisfläche mit möglichst hohem Füllfaktor und dicht benachbart angeordneten Hauptelektroden bedeckt, die sich untereinander nicht berühren. Vorteilhafterweise wird die Querelektrode im Bereich der Öffnungen der Ringe mit breiterem Querschnitt ausgelegt. Dies hat den Vorteil, daß im Bereich der Verbindung mit den jeweiligen Ringen ein höherer Spannungsabfall an der Querelektrode auftritt. Damit wird mit geringerer Betriebsspannung ein größerer nutzbarer Potentialbereich erzielt. Das an den Querelektroden abgegriffene Potential wird über den Ringen der jeweiligen Hauptelektrode gehalten. Ein rotationssymmetrisch von außen nach innen ansteigender oder fallender Potentialverlauf wird somit erzielt. Die Form des Potentialverlaufs wird durch die Wahl der Abgriffsstellen an der Querelektrode vorgegeben.

Eine Korrekturelektrode ist gemäß einer Weiterbildung der Erfindung zwischen den Hauptelektroden angeordnet. Dabei ist die Korrekturelektrode mittels einer weiteren Ansteuerelektrode ansteuerbar. Das Vorsehen einer oder mehrerer derartiger Korrekturelektroden hat den Vorteil, daß nicht nur ein stetig ansteigendes oder abfallendes Profil des Potentialverlaufs erzielbar ist, sondern ein beliebiges Potentialverlaufsprofil.

Erfindungsgemäß ist vorgesehen, daß beide Flächen des Kompensationselements strukturierte Elektroden aufweisen. Dies hat den Vorteil, daß durch unterschiedliche Strukturierung der Elektroden unterschiedliche optische Effekte erzielt beziehungsweise kompensiert werden. Dabei sind nicht nur rotationssymmetrische Anordnungen, sondern auch davon abweichende Flächenverteilungen vorgesehen. Auf diese Weise ist es möglich, Tilt, Fokus, Defokus und/oder Astigmatismus zu kompensieren, in dem Potentialverläufe realisiert werden, die einer Zylinderlinse, einem Keil, einer sphärischen Linse und/oder einer asphärischen Linse in einem einzigen Kompensationselement kombiniert werden.

Vorteilhaftweise werden an die Querelektrode unterschiedliche Spannungen angelegt. Erfindungsgemäß ist vorgesehen, daß die Querelektrode einen variablen Querschnitt aufweist. Dies hat den Vorteil, daß ein beliebiger nicht linearer Spannungsabfall erzielt wird und somit ein Potentialprofil mit nicht linearem Anstieg. Mittels einer derartigen Modulation der Querelektrode ist somit eine beliebige Phasenform des Kompensationselements erzeugbar.

Vorteilhafterweise sind zwischen Hauptelektrode und Querelektrode Zuführelektroden angeordnet, deren Kontaktstellen mit der Querelektrode nicht-äquidistant angeordnet sind. Dies stellt eine vorteilhafte weitere Variante dar, um das Potentialprofil zu optimieren.

Erfindungsgemäß werden an die Ansteuerelektroden unterschiedliche Spannungen angelegt. Dies hat den Vorteil; daß je nach gewünschtem Phasenprofil unterschiedliche Spannungen an den Hauptelektroden angelegt werden und durch die somit variierten Potentialverläufe in Kombination mit der Phasenhub-Spannungs-Kennlinie des verwendeten Materials unterschiedliche Phasenprofile erzielt werden. So lassen sich bei gleicher Spannungsdifferenz an den Ansteuerelektroden unterschiedliche Potentialverläufe erzielen.

Ebenso ist es vorteilhaft, unterschiedliche Spannungen an Elektrodenstrukturen anzulegen, die an sich gegenüberliegenden Seiten eines Materials mit variablem Brechungsindex angeordnet sind. Selbst wenn eine erste dieser Elektrodenstrukturen im einfachsten Fall flächig ausgebildet ist, läßt sich auf diese Weise der Nullpunkt des an der anderen Elektrodenstruktur an der Querelektrode angelegten Potentials entlang der Querelektrode verschieben indem die Spannung, die an der ersten Elektrodenstruktur anliegt, variiert wird. Auf diese Weise lassen sich geänderte Phasenprofile erzielen, ohne daß die an die andere Elektrodenstruktur angelegte Spannung geändert werden müßte.

Ein erfindungsgemäßes Gerät zum Lesen und/oder Beschreiben optischer Aufzeichnungsträger weist ein Kompensationselement gemäß der Erfindung auf. Dies hat den Vorteil, daß insbesondere bei optischen Aufzeichnungsträgern hoher Speicherdichte auftretende Wellenfrontstörungen, beispielsweise durch Tilt oder unterschiedliche Schichtdicke hervorgerufen, kompensiert werden. Derartige Wellenfrontstörungen beeinflussen besonders kritisch die Genauigkeit des Lesens beziehungsweise Beschreibens derartiger optischer Aufzeichnungsträger. Bei einem erfindungsgemäßen Gerät werden diese Wellenfrontstörungen optimal kompensiert.

Weitere Vorteile der Erfindung sind auch in der nachfolgenden Beschreibung von Ausführungsbeispielen enthalten. Es versteht sich, daß die Erfindung nicht auf die beschriebenen Beispiele beschränkt ist, sondern auch dem Fachmann geläufige Abwandlungen mit einschließt.

Dabei zeigen:
- Fig. 1: Kompensationselement im Querschnitt;
- Fig. 2: Elektrodenstruktur für sphärische Aberration;
- Fig. 3: Elektrodenstruktur für Koma-Aberration;
- Fig. 4: Phasenhub-Spannungs-Kennlinie;
- Fig. 5: Elektrodenstruktur mit Korrekturelektrode;
- Fig. 6: Detailansicht zu Fig. 5;
- Fig. 7: Spannungsabfall über die Querelektrode gemäß einer ersten Variante zu Fig. 5;
- Fig. 8: Spannungsabfall über die Querelektrode gemäß einer zweiten Variante zu Fig. 5;
- Fig. 9: Elektrodenstruktur mit modifizierter Querelektrode;
- Fig. 10: Detailansicht zu Fig. 9;
- Fig. 11: Elektrodenstruktur mit variablem Abgriff;
- Fig. 12: Detailansicht zu Fig. 11;
- Fig. 13: Spannungsabfall bei Querelektrode mit konstantem Querschnitt;
- Fig. 14: Spannungsabfall bei Querelektrode mit variablem Querschnitt;
- Fig. 15: Spannungsabfall bei Querelektrode mit Zuführelektroden.

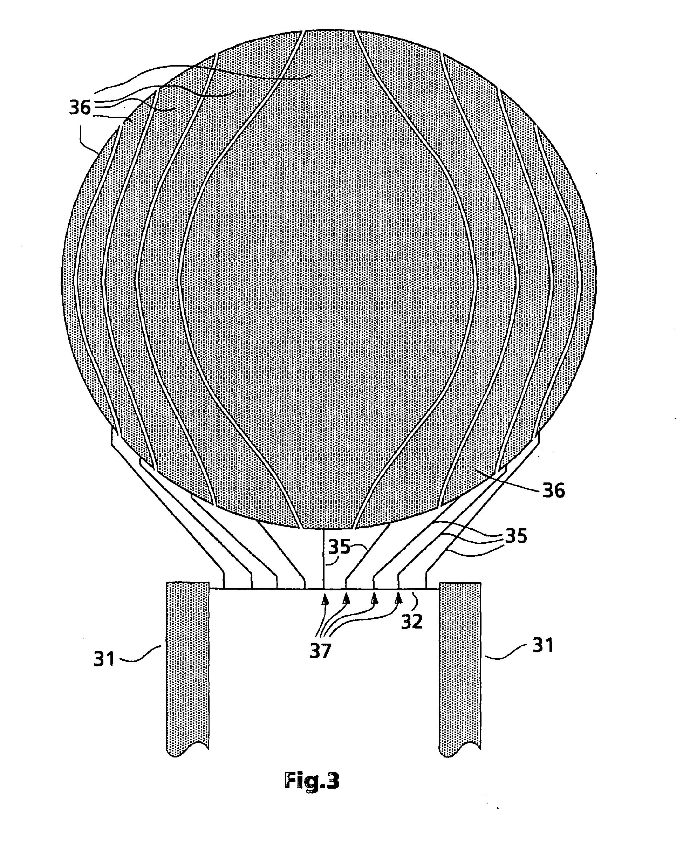

Die Figuren 3, 11 und 12 stellen kein Ausführungsbeispiel der Erfindung dar, da hier Hauptelektroden nicht direkt, sondern über Zuführelektroden mit einer Querelektrode verbunden sind.

Ein Kompensationselement gemäß der Erfindung weist als seinen Brechungsindex änderndes Material beispielsweise Flüssigkristalle auf, die in Abhängigkeit eines lokalen elektrischen Feldes die Phase eines einfallenden Lichtstrahls modulieren. Insbesondere werden im folgenden Flüssigkristallelemente mit besonders effizienten Elektrodenstrukturen beschrieben. Dabei werden interne Spannungsabfälle erzeugt, welche den wellenfrontmodulierenden Elektroden zur Verfügung gestellt werden. Durch diesen Schritt lassen sich eine Vielzahl von Elektroden mit einfachem Ansteueraufwand betreiben. Die hohe Anzahl der Elektroden erlaubt eine hochauflösende Darstellung des Phasenprofils und somit eine gute Korrektur der Wellenfront. Die Elemente sind insbesondere so konstruiert, daß auch zeitlich sich verändernde Wellenfrontfehler kompensiert werden. Die Funktionsweise wird zunächst anhand zweier Elemente zur Korrektur von Koma und sphärischer Aberration beschrieben.

Die hier beschriebenen Flüssigkristallelemente dienen zur Korrektur von Wellenfrontfehlern wie z.B. Koma, sphärische Aberrationen, etc., in optischen Systemen. Dabei zeichnen sie sich durch eine möglichst einfache, aber dennoch trickreiche Elektrodenstruktur aus, welche die notwendige Ansteuerung auf ein Minimum beschränkt. Die Ansteuerung erfolgt mit nur einer Ansteuerspannung, vorzugsweise 1kHz Wechselspannung mit regelbarer Amplitude von etwa 2-10V. Durch in der Elektrodenstruktur erzeugte interne Spannungsabfälle lassen sich kontinuierliche Wellenfrontverformungen erzeugen. Die Elektrodenstruktur besteht in den Ausführungsbeispielen aus nur einer transparenten, leitfähigen Schicht aus Indium-Zinn-Oxid, auch als ITO bezeichnet, mit homogenem Flächenwiderstand und ist somit sehr leicht herzustellen. Es sind hier aber auch andere transparente leitfähige Materialien wie Polymere etc. voerteilhaft verwendbar.

Die im folgenden beschriebenen Elemente werden zur Kompensation von Koma beziehungsweise sphärischen Aberrationen verwendet, insbesondere in einem Gerät zum Lesen oder Beschreiben optischer Aufzeichnungsträger, beispielsweise einem DVD Pickup-Kopf. Besonders bei kommenden Generationen derartiger Geräte, die Lichtquellen kürzerer Wellenlänge verwenden, wird eine aktive Kompensation notwendig werden. Der Trend bei der DVD geht zu Objektivlinsen mit einer numerischen Apertur von N.A.=0.85 bei einer Schutzsubstratdicke von 0.1mm. Die beim Umschalten zwischen unterschiedlichen Schichten, beispielsweise von Layer I of Layer II, eines mehrschichtigen optischen Aufzeichnungsträgers entstehenden sphärischen Abberationen müssen kompensiert werden. Bei größeren Substratdicken lassen sich durch aktive Tilt-Kompensation die Toleranzen für die Diskverkippung beträchtlich erweitern.

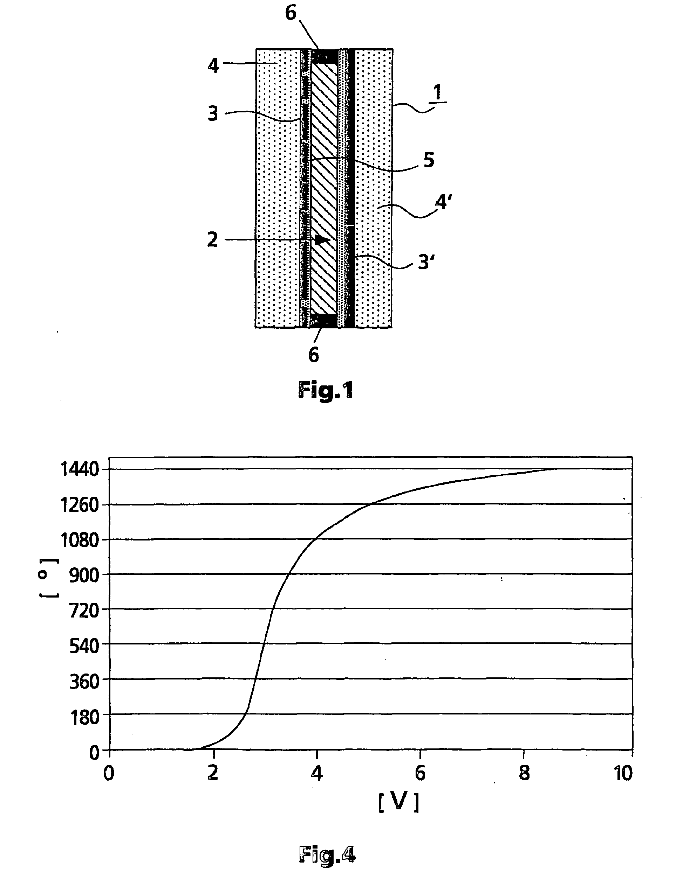

Das in Fig. 1 im Querschnitt abgebildete, als Flüssigkristall-Kompensationselement 1 ausgebildete Kompensationselement nutzt die lokale Änderung des Brechungsindexes in einer dünnen Flüssigkristallschicht 2 zur Modulation der Wellenfront.

Die lokale Brechungsindexverteilung wird durch eine geeignete Elektrodenstruktur 3 erzeugt und läßt sich durch die angelegte Spannung variieren. Mit Hilfe von Meshing-Techniken, das sind auf der Elektrodenstruktur 3 erzeugte Spannungsabfälle, lassen sich die Anzahl der anzusteuernden Elektroden drastisch reduzieren. Fig. 1 zeigt den Querschnitt eines solchen Elementes. Die Elektrodenstrukturen 3, 3' aus transparent leitfähigem Material, hier Indium-Zinn-Oxid ITO, werden mittels Photolithographie auf Glassubstrate 4, 4' aufgebracht. Eine Schicht aus Polyimid 5 dient der einheitlichen Orientierung der Flüssigkristalle 2 und wird nach dem Aufschleudern durch Spin-Coating in Vorzugsrichtung gerieben. Die Zelle wird unter Vakuum mit Flüssigkristallen 2 befüllt und entgültig versiegelt. Abstandshalter 6, auch Spacer genannt, verhindern den Kontakt zwischen beiden Elektrodenseiten und geben die Zelldicke vor. Die Elektrodenstruktur 3' ist hier als Masseelektrode ohne besondere Struktur dargestellt.

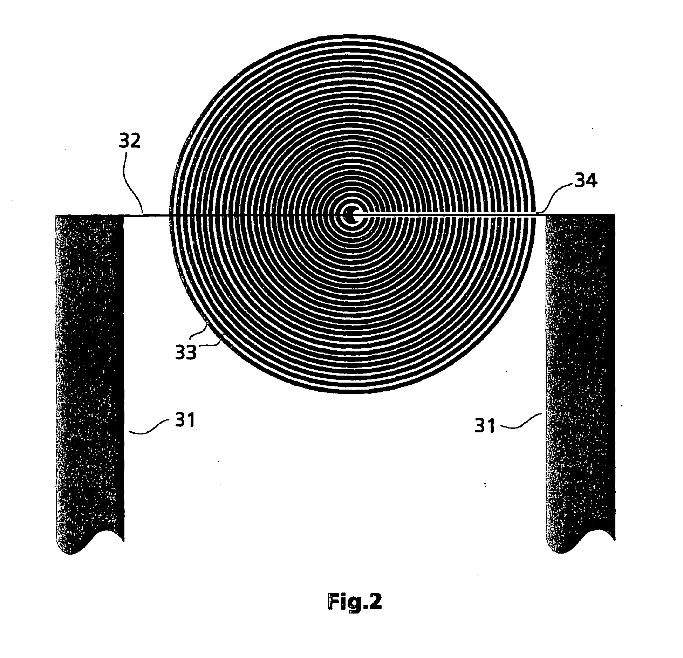

In Fig. 2 wird eine Elektrodenstruktur für sphärische Aberrationen beschrieben. Das in Bild 2 gezeigte Elektrodendesign erlaubt die Kompensation von kegel- und sphären-ähnlichen Wellenfronten. Dabei werden nur zwei Ansteuerelektroden 31 benötigt. Je nach Zelldicke der Flüssigkristallschicht und dem verwendeten Material lassen sich so mehrere Pi Phasenmodulation erreichen.

Mit Hilfe von zwei breiten Ansteuerelektroden 31 wird eine dünne Querelektrode 32 gespeist. Aufgrund ihrer geringen Breite besitzt sie bei gleichem Flächenwiderstand einen weitaus höheren Widerstand. Die an den Ansteuerelektroden 31 angelegte Spannung fällt daher fast vollständig über der Querelektrode 32 ab. An verschiedenen Positionen entlang der Querelektrode 32 wird das jeweilig gewünschte Potential durch die Hauptelektroden 33 abgegriffen. Die Hauptelektroden 33 liegen somit auf dem jeweilig zugeordneten Potential. Durch die Anzahl und die Position der Abgriffsstellen lassen sich die Anzahl der Phasenstufen und Phasenverläufe wie linear, logarithmisch, etc., zuordnen.

Die Hauptelektroden 33 sind in diesem Ausführungsbeispiel als kreisförmige Ringe ausgebildet, die im linken Teil mit der Querelektrode 32 verbunden sind, während sie rechts von der Mitte jeweils eine Öffnung 34 aufweisen, durch die die Querelektrode 34 zur rechten Ansteuerelektrode 31 geführt ist.

In Fig. 3 wird eine Elektrodenstruktur zur Korrektur von Koma-Aberrationen beschrieben. Das gezeigte Elektrodendesign erlaubt die Kompensation von komaähnlichen Wellenfronten. Dabei werden ebenfalls nur zwei Ansteuerelektroden 31 benötigt.

Der Unterschied zum sphärischen Korrekturelement der Fig. 2 liegt in der Art des Spannungsabgriffs. Die für den Spannungsabfall verantwortliche Querelektrode 32 liegt nun außerhalb des modulierenden Bereichs. Zuführelektroden 35 greifen das gewünschte Potential an der Querelektrode 32 ab und führen es bis zu den Hauptelektroden 36.

Die Form der Hauptelektroden 36 ist dabei durch die gewünschte Phasenmodulation und die dafür erforderliche Potentialverteilung abhängig. Die Anzahl der Hauptelektroden 36 ist von der gewünschten Phasendiskretisierung abhängig. Das Potential jeder einzelnen Hauptelektrode 36 wird durch geeigneten Potentialabgriff an Abgriffsstellen 37 der Querelektrode 32 auf einen bestimmten Arbeitsbereich in der Flüssigkristalleichkurve, siehe dazu auch Fig. 4, hin optimiert, um eine möglichst effiziente Korrektur zu erlauben.

Die Wahl des Arbeitsspannungsbereichs sowie die Wahl der Abgriffsstellen 37 bieten zwei für die kontinuierliche Modulation notwendige Freiheitsgrade.

Die in Fig. 4 dargestellte Kennlinie zur Flüssigkristall-Ansteuertechnik, auch als Flüssigkristalleichkurve bezeichnet, zeigt den lokalen Phasenhub in Grad [°] eines Kompensationselementes bei dem durch die Elektrodenstruktur vorgegebenen lokalen Potential, aufgetragen in Volt [V]. Diese Phasenhub-Spannungs-Charakteristik zeigt den entstehenden Phasenhub bei an den Elektrodenstrukturen 3, 3' anliegender Potentialdifferenz. Durch die geeignete Wahl des Ansteuerbereichs in Kombination mit der Wahl der Abgreifpunkte 37 an der Querelektrode 32 wird ein möglichst geeignetes Phasenprofil erzeugt.

Beispielsweise empfiehlt sich bei der sphärischen Korrektur ein Potential zwischen 3.5 Volt am innersten und 5.2 Volt am äußersten Ring der Hauptelektroden 33, um ein möglichst annähernd sphärisch gekrümmtes Profil zu bilden. Durch geeignete Wahl der Abgriffsstellen 37 entlang der Querelektrode 32 läßt sich das Profil auf eine ideale Sphärenform hin optimieren. Ist ein anders gekrümmtes Profil gewünscht, so bietet sich der Bereich von etwa 2 Volt bis 2,7 Volt an, ein eher linearer Bereich liegt etwa zwischen 2,7 Volt und 3,3 Volt sowie etwa oberhalb von 6 Volt

Zu Schaltverhalten und Schaltzeiten ist folgendes anzumerken: Bei nematischen Flüssigkristallen hängt die Schaltzeit wesentlich von der Zelldicke und dem verwendeten Material ab. Der maximal realisierbare Phasenhub ist dabei direkt der Zelldicke proportional. Zur Korrektur einer Wellenfront mit einem Peak-to-Valley-Wert von unter einem halben Lambda, also weniger als der Hälfte der Wellenlänge des verwendeten Lichts, lassen sich mit Nematen Schaltzeiten unter 10ms realisieren. Für mehrere Lambda sind nur Schaltzeiten um einige 100ms möglich.

Es gibt unterschiedliche Flüssigkristallmischungen, sowie andere Materialien wie Kristalle, Polymere, Polymer-Flüssigkristall-Kombinationen, welche in solchen Elementen als phasenschiebende Materialen eingesetzt werden können. Nematische Flüssigkristalle stellen aufgrund ihrer hohen Doppelbrechung bei guten Transmissionseigenschaften, geringen Ansteuerspannungen, guten Polarisationseigenschaften sowie geringen Kosten ein gut geeignetes Material für nicht zu schnelle Schaltvorgänge, die im Bereich von einigen 10ms bis Sekunden liegen, dar. Will man die Schaltzeiten verringern, muß im allgemeinen zu anderen Materialien übergegangen werden. Diese zeigen jedoch andere nachteilige Effekte. Diese sind beispielsweise bei Kristallen die geringe Brechungsindexänderung sowie hohe Ansteuerspannungen, oder bei ferroelektrischen Flüssigkristallen die geringe Doppelbrechung mit polarisationsändernden Eigenschaften. Wird für derartige schnellere Materialien die erfindungsgemäße Idee verwendet, so treten die genannten Nachteile gegenüber den erfindungsgemäß erzielten Vorteilen in den Hintergrund.

Mit Hilfe des durch die oben beschriebene Erfindung genutzten internen Spannungsabfalls lassen sich auch kompliziertere:Elektroden und die damit verbundenen Phasenprofil erzeugen, beispielsweise ein kombiniertes Koma-Sphäre-Element oder 2D-Koma-Korrekturelement. Flüssigkristall-Kompensationselemente zur Korrektur von Aberrationen wurden bisher nur mit direkten Zuleitungen zu einzelnen Flächenelektroden realisiert. Dabei werden die einzelnen Hauptelektroden direkt angesteuert. Solche Elemente besitzen sehr große Phasensprünge, dessen Höhe durch die Anzahl der Steuerelektroden bestimmt wird. Bei einer Wellenfrontkorrektur von 1*λ wird die Wellenfront bei 5 Ansteuerelektroden nur in Sprüngen von X/5 korrigiert. Die erfindungsgemäßen Elemente benötigen nur eine einzige Ansteuerspannung und erlauben zudem eine weitaus feinere Phasendiskretisierung. Bei 50 Hauptelektroden beträgt diese beispielsweise λ/50.

Besonders vorteilhaft sind das erfindungsgemäße Konzept des Spannungsabgriffs für Kompensationselemente 1 sowie das Konzept der Zuführelektroden 35 zu beliebig geformten Hauptelektroden. Ebenso das Elektrodendesign sowie das Element zur Kompensation sphärischer Aberrationen und Koma. Erfindungsgemäß sind ebenfalls Elemente mit unterschiedlichen, sich gegenüberliegenden Elektrodenstrukturen vorgesehen. Dabei werden erfindungsgemäß Elektrodenstrukturen 3, 3' auf den gegenüberliegenden Glassubstraten 4, 4' angeordnet. So werden beispielsweise Koma und sphärische Aberrationen in einem Element kompensiert. Erfindungsgemäße Elemente mit komplexeren Hauptelektroden ermöglichen beliebige Aberrationen, schaltbare Arrays wie Checkergratings, Keilarrays, etc., unsymmetrische Sphärenkorrektur, beliebige radial symmetrische Korrekturen, oder im Element lokal integrierte Sonderfunktionen. Ebenfalls im Rahmen der Erfindung liegen Elemente mit mehrfach den Potentialabfall nutzenden internen Elektroden. Dabei sind sowohl Lösungen mit mehreren Querelektroden 32, und einer Spannungsversorgung als auch mit mehreren Querelektroden 32, und mehreren Spannungsversorgern vorgesehen. Erfindungsgemäße mehrschichtige Elektrodenstrukturen lassen sich beispielsweise mit Isolationsschichten und Spannungsdurchführungen realisieren.

Im folgenden sind weitere Ausführungsbeispiele angegeben. Diese zeigen Varianten mit besonders effizienten Elektrodenprofilen zur Korrektur der Wellenfront. Alle in den folgenden Figuren dargestellten Erweiterungen der Elektrodenstruktur dienen der Erzeugung von nun fast beliebig geformten rotationssymmetrischen Phasenverläufen. Die oben genannten Beispiele beschreiben hauptsächlich sphärische Profile, schließen aber auch die hier näher ausgeführten nicht-sphärischen Profile ein. Die Graphen stellen schematisch den über die Querelektrode abfallenden Spannungsverlauf dar. Der in der Flüssigkristallschicht resultierende Phasenhub wird unter Zuhilfenahme der Phasenhub-Spannungs-Charakteristik der Fig. 4 erreicht. Je nach gewähltem Spannungsbereich lassen sich so verschieden korrigierte Wellenfronten erzeugen.

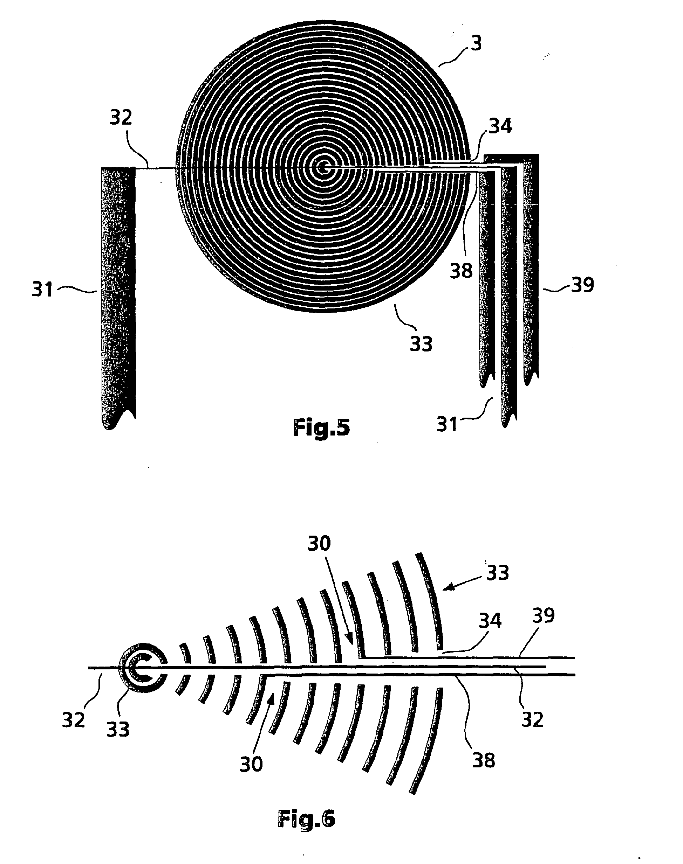

Fig. 5 zeigt eine erfindungsgemäße Elektrodenstruktur mit Korrekturelektroden. Ansteuerelektroden 31, Querelektrode 32 sowie Hauptelektroden 33 entsprechen den zu Fig. 2 beschriebenen. Die Öffnung 34 ist etwas breiter gehalten und ermöglicht die Durchführung von Korrekturelektroden 38, 39, die mit zumindest einer der Hauptelektroden 33 verbunden sind.

Dies ist in Fig. 6 im Detail dargestellt. Man erkennt die Querelektrode 32 und die nur teilweise und größtenteils unvollständig dargestellten Hauptelektroden 33 sowie die Korrekturelektroden 38, 39. Sie sind, wie die Querelektrode 32, durch die Öffnung 34 geführt und an Kontaktstellen 30 mit jeweils einer der Hauptelektroden 33 verbunden. Da diese Hauptelektrode 33 auch mit der Querelektrode 32 im linken, hier nicht dargestellten Bereich der Elektrodenstruktur 3 verbunden ist, ändert sich dadurch auch der Potentialverlauf auf der Querelektrode 32. Mittels dieses erweiterten sphärischen Elektrodenprofils ist es möglich, eine verbesserte Anpassung der Phase beziehungsweise einer Erzeugung rotationssymmetrischer Profile höherer Ordnungen zu erzielen. Die Korrekturelektroden 38, 39 dienen zur Variation des sphärischen Profils.

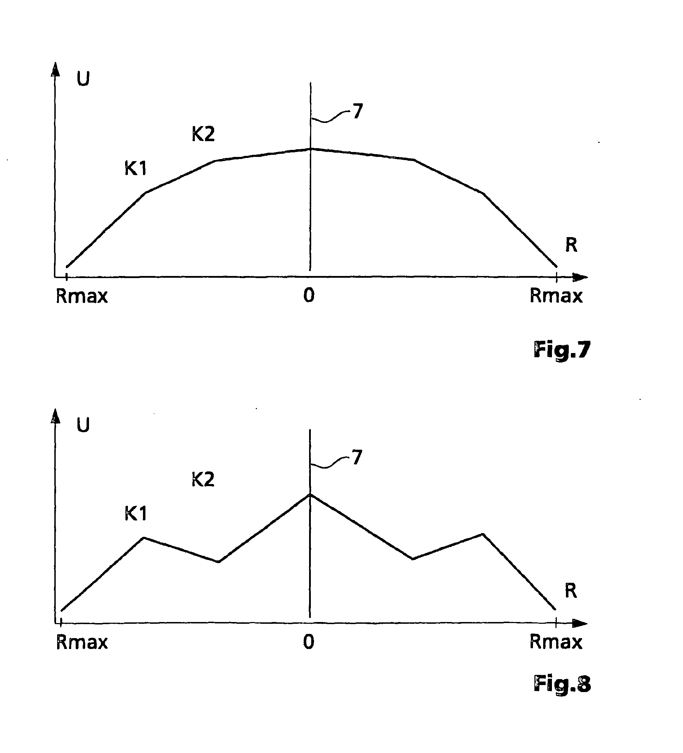

In Fig. 7 ist der Spannungsabfall U auf der vertikalen Achse über dem Radius R auf der horizontalen Achse aufgetragen. Beim Radius R=0, also im Mittelpunkt der ringförmigen Hauptelektroden 33, ist die Spiegelachse 7 für das Spannungsprofil eingezeichnet. Mit K1, K2 sind die Punkte gekennzeichnet, an denen die Korrekturelektroden angreifen. Man erkennt, daß der Potentialverlauf zwischen dem maximalen Radius Rmax sowie diesen Angriffspunkten K1, K2 nahezu linear ist, während in den Punkten K1, K2 ein Knick auftritt.

Fig. 8 zeigt einen anderen Verlauf des Spannungsabfalls entsprechend Fig. 5, wobei die Spannungen an den Korrekturelektroden 38, 39 so gewählt sind, daß zwischen Punkt K1 und K2 entgegengesetzte Steigung im Vergleich zum Rest auftritt.

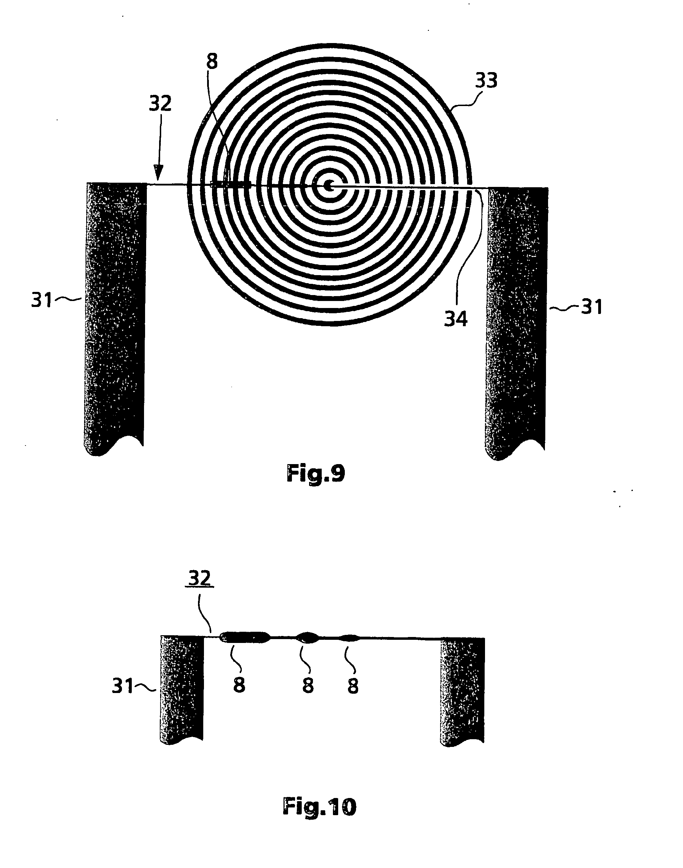

Fig. 9 zeigt eine Elektrodenstruktur mit modifizierter Querelektrode 32. Wie zu Fig. 1 beschrieben ist die Querelektrode 32 im linken Bereich mit den Hauptelektroden 33 verbunden, während im rechten Bereich eine Öffnung 34 vorgesehen ist. Die Querelektrode 32 ist im linken Bereich mit Verdickungen 8 versehen. Dadurch ändert sich ihr Widerstand lokal, d.h. die Abgriffsspannungen variieren trotz gleichmäßigem Abstand der Abgriffspunkte zueinander. Auch auf diese Weise ist eine ideale Anpassung der Wellenfront an die gewünschten Eigenschaften erzielbar.

Fig. 10 zeigt die modifizierte Querelektrode 32 in vergrößerter schematischer Darstellung. Die Verdickungen 8 können dabei sowohl in einer gleichmäßigen sich über einen gewissen Bereich erstreckenden konstanten Verbreiterungen des Querschnitts bestehen als auch, wie weiter rechts dargestellt, in unregelmäßigen Verbreiterungen realisiert sein.

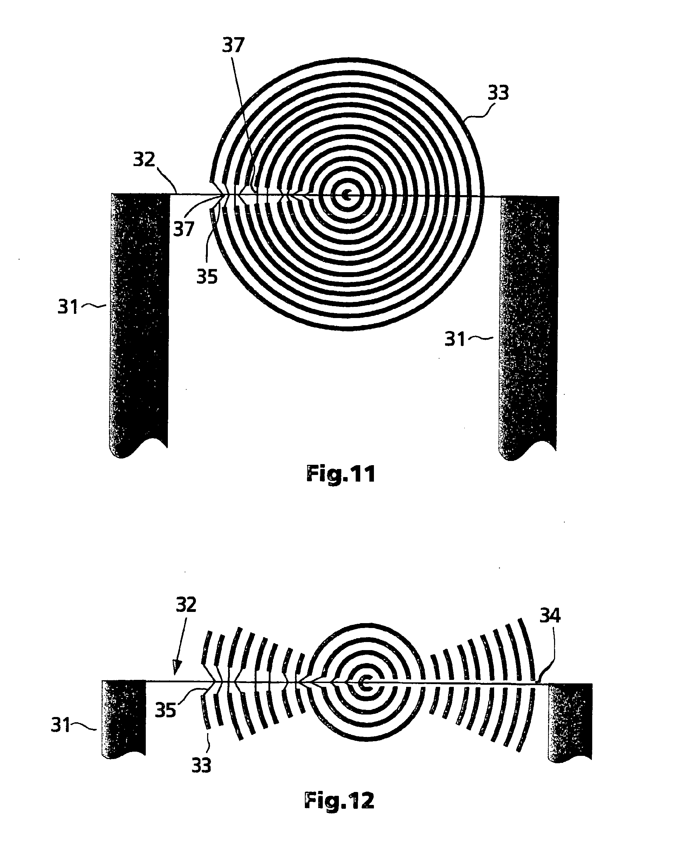

Fig. 11 zeigt die Elektrodenstruktur gemäß Fig. 2 mit variablem Abgriff an der Querelektrode 32. Die Abgriffsstellen 37, an denen die Hauptelektroden 33 mit der Querelektrode 32 verbunden sind, sind im Gegensatz zu Fig. 2 nicht mehr äquidistant angeordnet, sondern weisen unterschiedliche Abstände zueinander auf. Zur Verbindung zwischen Querelektrode 32 und Hauptelektroden 33 sind Zuführelektroden 35 vorgesehen.

Fig. 12 zeigt dies ausschnittsweise.

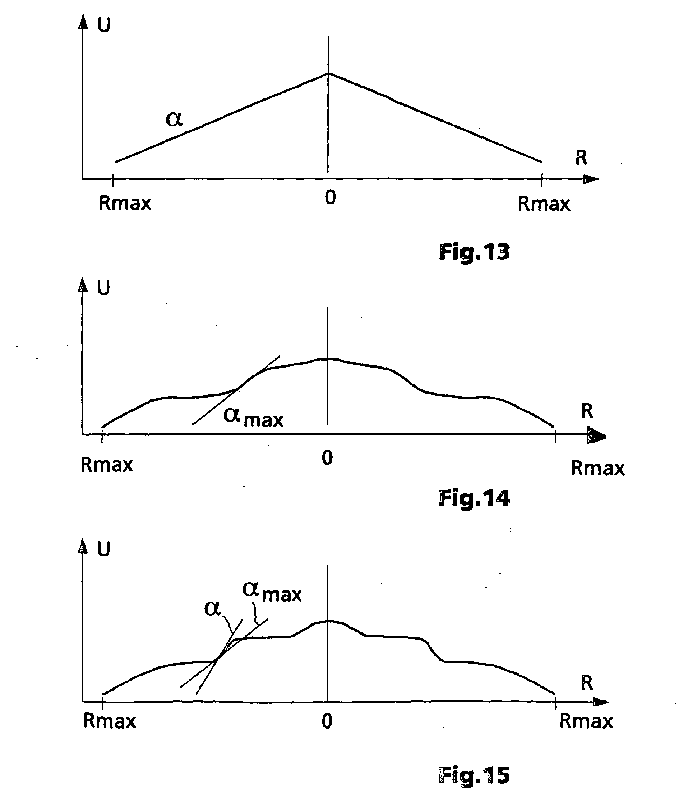

Fig. 13 zeigt den Spannungsabfall bei einer Querelektrode mit konstantem Querschnitt. Die Auftragung entspricht dabei derjenigen zu Fig. 7 oder 8. Man erkennt den linearen Verlauf über dem Radius mit Steigungswinkel α. α kann hier einen Maximalwert von αmax=45° nicht übersteigen.

Fig. 14 zeigt einen Spannungsabfall entsprechend Fig. 13 allerdings für eine Querelektrode mit variablem Querschnitt. Entsprechend der Variation des Querschnitts variiert der Spannungsanstieg α, der auch hier einen oberen Wert αmax nicht übersteigen kann.

Fig. 15 zeigt einen Spannungsabfall entsprechend den vorhergehenden Figuren, allerdings unter Verwendung von Zuführelektroden 35. Durch die dabei mögliche Spreizung beziehungsweise Stauchung der Abstände der Abgriffsstellen 37 ist es hierbei möglich, eine Steigung α zu erzielen, die größer ist als αmax der vorhergehenden Diagramme. Dies liegt unter anderem auch am kleinen Querschnitt der Zuführelektroden 35, die eine engere Staffelung ermöglichen.

## Patentansprüche

1. Optisches Kompensationselement (1) aufweisend:
eine erste transparente Fläche (4'), auf der eine transparente Elektrode (3') aufgebracht ist,
eine zweite transparente Fläche (4), auf der eine Vielzahl transparenter Hauptelektroden (33, 36) angeordnet ist, die jeweils an genau einer Stelle mit einer Querelektrode (32), und über diese mit Ansteuerelektroden (31) verbunden sind,
ein in Abhängigkeit von angelegter Spannung seinen Brechungsindex änderndes Material (2), welches zwischen erster und zweiter transparenter Fläche (4', 4) angeordnet ist, wobei jeweils mehrere Hauptelektroden (33, 36) am verschiedenen Positionen entlang der Querelektrode direkt mit der Querelektrode (32) verbunden sind, **dadurch gekennzeichnet, daß** über der Querelektrode (32) ein Spannungsabfall stattfindet, wodurch an verschiedenen Positionen entlang der Querelektrode (32) gewünschte Potentiale abgreifbar sind.

2. Optisches Kompensationselement gemäß Anspruch 1, **dadurch gekennzeichnet, daß** Querelektrode (32) und Ansteuerelektrode (31) aus dem gleichen Material bestehen, wobei der Querelektrodenquerschnitt geringer ist als der Hauptelektrodenquerschnitt.

3. Optisches Kompensationselement gemäß einem der vorhergehenden Ansprüche, **dadurch gekennzeichnet, daß** die Hauptelektroden (33) im wesentlichen rotationssymmetrisch angeordnet sind und für konstanten Radius (R) eine konstante Spannung gleichen Vorzeichens aufweisen.

4. Optisches Kompensationselement gemäß einem der vorhergehenden Ansprüche, **dadurch gekennzeichnet, daß** die Hauptelektroden (33) die Form nahezu geschlossener Ringe mit unterschiedlichen Radien aufweisen und an der der Öffnung gegenüberliegenden Seite mit der Querelektrode (32) verbunden sind.

5. Optisches Kompensationselement gemäß einem der vorhergehenden Ansprüche, **dadurch gekennzeichnet, daß** zwischen den Hauptelektroden (33, 36) zumindest eine Korrekturelektrode (38) angeordnet ist, die mittels einer weiteren Ansteuerelektrode ansteuerbar ist.

6. Optisches Kompensationselement gemäß einem der vorhergehenden Ansprüche, **dadurch gekennzeichnet, daß** beide Flächen (4, 4') strukturierte Elektroden (3, 3') aufweisen.

7. Optisches Kompensationselement gemäß einem der vorhergehenden Ansprüche, **dadurch gekennzeichnet, daß** an die Ansteuerelektroden (31) unterschiedliche Spannungen anlegbar sind.

8. Kompensationselement gemäß einem der vorhergehenden Ansprüche, **dadurch gekennzeichnet, daß** die Querelektrode (32) einen variablen Querschnitt (8) aufweist.

9. Gerät zum Lesen und/oder Beschreiben optischer Aufzeichnungsträger, aufweisend ein Kompensationselement (1) gemäß einem der vorhergehenden Ansprüche.

## Claims

1. Optical compensation element (1) having:
a first transparent surface (4') on which a transparent electrode (3') is fit,
a second transparent surface (4) on which a large number of transparent main electrodes (33, 36) are arranged, which are in each case connected at one point, and only at one point, to a transverse electrode (32) and, via this, to drive electrodes (31),
a material (2) which changes its refractive index as a function of the applied voltage and is arranged between the first and the second transparent surface (4', 4), wherein two or more main electrodes (33, 36) are in each case connected directly to the transverse electrode (32) at various positions along the transverse electrode, **characterized in that** there is a voltage drop across the transverse electrode (32), as a result of which desired potentials can be tapped off at different positions along the transverse electrode (32).

2. Optical compensation element according to Claim 1,
**characterized in that** the transverse electrode (32) and the drive electrode (31) are composed of the same material, with the transverse electrode cross section being smaller than the main electrode cross section.

3. Optical compensation element according to one of the preceding claims,
**characterized in that** the main electrodes (33) are arranged in an essentially rotationally symmetrical manner, and have a constant voltage with the same mathematical sign for a constant radius (R).

4. Optical compensation element according to one of the preceding claims,
**characterized in that** the main electrodes (33) are in the form of virtually closed rings with different radii, and are connected to the transverse electrode (32) on the side opposite the opening.

5. Optical compensation element according to one of the preceding claims,
**characterized in that** at least one correction electrode (38) is arranged between the main electrodes (33, 36) and can be driven by means of a further drive electrode.

6. Optical compensation element according to one of the preceding claims,
**characterized in that** both surfaces (4, 4') have structured electrodes (3, 3').

7. Optical compensation element according to one of the preceding claims,
**characterized in that** different voltages can be applied to the drive electrodes (31).

8. Optical compensation element according to one of the preceding claims,
**characterized in that** the transverse electrode (32) has a variable cross section (8).

9. Appliance for reading and/or writing to optical recording media, having a compensation element (1) according to one of the preceding claims.

## Revendications

1. Élément de compensation optique (1) comprenant : une première surface transparente (4'), sur laquelle une électrode transparente (3') est introduite, une deuxième surface transparente (4), sur laquelle une pluralité d'électrodes principales transparentes (33,36) est disposée, lesquelles électrodes principales sont respectivement connectées à une électrode transversale (32) à un endroit précis, et sont chacune connectées à des électrodes de commande (31) via ladite électrode transversale, un matériau (2) dont l'indice de réfraction change en fonction de la tension appliquée, ledit matériau étant agencé entre les première et deuxième surfaces transparentes (4', 4), où plusieurs électrodes principales (33, 36) sont directement connectées à l'électrode transversale (32) à différents endroits le long de l'électrode transversale, **caractérisé en ce qu'**une baisse de tension a lieu sur l'électrode transversale (32), où les potentiels souhaités sont contestables à différents endroits le long de l'électrode transversale (32).

2. Élément de compensation optique selon la revendication 1, **caractérisé en ce que** l'électrode transversale (32) et l'électrode de commande (31) présentent le même matériau, où la coupe transversale de l'électrode transversale est plus courte que la coupe transversale de l'électrode principale.

3. Élément de compensation optique selon une des revendications précédentes, **caractérisé en ce que** les électrodes principales (33) sont essentiellement disposées selon une symétrie rotationnelle et présentent, pour un rayon constant (R), une tension constante de même signe.

4. Élément de compensation optique selon une des revendications précédentes, **caractérisé en ce que** les électrodes principales (33) se présentent approximativement sous la forme d'anneaux fermés dotés de rayons différents et sont connectées à l'électrode transversale (32) sur le côté situé en face de l'ouverture.

5. Élément de compensation optique selon une des revendications précédentes, **caractérisé en ce qu'**entre les électrodes principales (33, 36) se trouve au moins une électrode de correction (38), laquelle peut être commandée au moyen d'une électrode de commande supplémentaire.

6. Élément de compensation optique selon une des revendications précédentes, **caractérisé en ce que** les deux surfaces (4, 4') comportent des électrodes structurées (3,3').

7. Élément de compensation optique selon une des revendications précédentes, **caractérisé en ce que** des tensions différentes peuvent être appliquées sur les électrodes de commande (31).

8. Élément de compensation selon une des revendications précédentes, **caractérisé en ce que** l'électrode transversale (32) présente une coupe transversale variable (8).

9. Appareil de lecture et/ou d'écriture sur des supports d'enregistrement optiques, comprenant un élément de compensation (1) selon une des revendications précédentes.
